# EUROPEAN PATENT APPLICATION

(11) **EP 3 572 203 A1**
(43) Date of publication of application: **27.11.2019**
(21) Application number: 18174154.7
(22) Date of filing: 24.05.2018
(51) Int. Cl.: B29C 45/00, B29C 47/04, B29C 47/00, G09F 5/00

(54) **SYSTEM WITH COLOR SELECTION ARTICLE FOR ARTIFICIAL TURF**

(71) Applicant: Polytex Sportbeläge Produktions-GmbH, 47929 Grefrath (DE)
(72) Inventor: SICK, Stephan, 47877 Willich-Neersen (DE); SCHMITZ, Dirk, 47652 Weeze (DE); SANDER, Dirk, 47647 Kerken (DE)
(74) Representative: Richardt Patentanwälte PartG mbB

(57) **Abstract**

The invention relates to a system (700) comprising one or more artificial turf fiber samples (704, 706) and a color selection article (400, 602, 604, 702, 832, 834, 836) for selecting the color of an artificial turf fiber (202). The color selection article is an injection-molded product comprising a defined amount of one or more first pigments (812, 814, 816) and at least a first area (A1, A2, A3, A4) having a thickness (h1, h2, h3, h4) in the range of plus/minus 20% of the fiber thickness of one of the one or more artificial turf fiber samples.

## Description

### Field of the invention

The invention relates to a method and system for selecting the color of artificial turf fiber and for a method of producing an artificial turf fiber of the selected color.

### Background and related art

Artificial turf or artificial grass is surface that is made up of fibers and is used to replace grass. The structure of the artificial turf is designed such that the artificial turf has an appearance that resembles grass. Typically, artificial turf is used as a surface for sports such as soccer, football, rugby, tennis, or golf, or for other playing fields or exercise fields. Furthermore, artificial turf is frequently used for landscaping applications. An advantage of using artificial turf is that it eliminates the need to care for a grass playing or landscaping surface, including regular mowing, scarifying, fertilizing, and watering.

The wide range of applications for artificial turf corresponds to at least as wide a range of pigments, pigment mixtures, and other substances used to give the artificial turf fibers a desired color. The product portfolio of most manufacturers of artificial turf now includes not only many different shades of green, but also a broad spectrum of other colors. In some cases, manufacturers of artificial turf even offer to produce artificial turf that completely or partially is of a particular color specified by the customer. For example, a customer may wish to equip a pitch with artificial turf containing a club logo, an advertisement, or certain markings of a selected color.

However, the production of artificial turf according to the exact color requirements of the customer is often technically difficult, expensive, and tedious for several reasons.

On the one hand, artificial turf fibers are often produced by an extrusion machine. In order to be able to offer a customer only a few color samples for a certain type of artificial turf fiber, a comparatively large polymer mass with a corresponding pigment composition must be produced for each artificial turf fiber color sample in order to be able to sufficiently fill the extrusion machine and to carry out the extrusion process. After each extrusion, the machine has to be cleaned in order to exclude contamination of the next extruded polymer mass with the pigments of the previously extruded polymer mass, because this contamination could result in color deviations of the sample from the final product.

In the context of the production of other plastic products - e.g., plastic furniture - a polymer mass comprising a defined amount of pigments is pressed into a form to generate a plastic platelet, which is used as a color sample for the respective product. For example, US 2015/0248850 A1 describes the use of color selection articles for selecting the color of a paint. Although this process saves material, the color of the sample platelets obtained in this process will be significantly different from the color of a thin artificial turf fiber having been created in an extrusion process using the identical polymer-and-pigment mixture.

Another problem in the production of a certain desired color is that the color of pigments can vary depending on the batch provided by a supplier, even if the pigments are constantly purchased from the same manufacturer.

A further problem is that field staff can carry only a limited amount of artificial turf field and color samples with them when visiting customers or potential customers, and this limitation may reduce the amount of samples and colors that can be shown to a customer.

### Summary

It is an objective of the present invention to provide for an improved method and system for selecting the color of artificial turf fiber and for an improved method of producing an artificial turf fiber of a particular color as specified in the independent claims. Embodiments of the invention are given in the dependent claims. Embodiments of the present invention can be freely combined with each other if they are not mutually exclusive.

In one aspect, the invention relates to a system comprising one or more artificial turf fiber samples and a color selection article for selecting the color of an artificial turf fiber. The color selection article is an injection-molded product comprising a defined amount of one or more first pigments and at least a first area having a thickness in the range of plus/minus 20% of the fiber thickness of one of the one or more artificial turf fiber samples.

Said features may be advantageous, because a customer is provided both with information regarding mechanical and optical properties of an artificial turf fiber and with information regarding the color of an artificial turf fiber that could be produced if ordered. In particular, as the thickness of the color selection article or the thickness of at least a region of this color selection article is identical or very similar to the thickness of the artificial fiber of the artificial fiber sample that will be produced based on the selected color selection article, the color of the fiber to be produced will more faithfully reflect the color of the color selection article, because the color selection article is as thin and as transparent as the fiber to be produced. Thus, the artificial turf fiber that will be created based on a customer's selection of a color selection article will very likely be exactly the color of the color selection article that was selected by the customer. This may be beneficial both for the customer and for the manufacturer of artificial turf fibers, including the field staff, because the time to production is significantly reduced, and because the number of test samples of artificial turf that need to be generated and shown to the customer before a big order is placed is also reduced; the generation of a test sample of artificial turf involves the creation of a polymer-pigment mixture that is extruded into a monofilament or a film that is further processed and transformed into an artificial turf fiber. At least for very large orders, it is common to produce one or more artificial turf test samples to prevent misunderstandings and complaints from the beginning. The production of test samples for artificial turf and also for the artificial turf fibers alone is expensive and time-consuming, because an extrusion machine typically requires a considerable minimum amount of polymer in order to become operative. Moreover, the extrusion machine needs to be cleaned after each extrusion process of all polymer and pigment residues. By providing a thin, typically transparent color selection article whose thickness corresponds to the thickness of the artificial turf fiber to be produced, the generated artificial turf fiber will very likely be accepted by the customer, because the color selection article of the system according to embodiments of the invention provides for a more realistic color impression in the context of artificial turf fiber production than comparatively thick, opaque plastic platelets used as color selection articles in other product segments such as furniture colors and paints. The system may also be referred to as a "color selection kit."

In a further beneficial aspect, the system is more compact and more convenient to carry than a collection of artificial turf samples, which are used as samples for selecting the color as well as the thickness of artificial turf fibers. This is because the artificial turf fiber sample may be provided in the form of a small piece of artificial turf, which has a larger volume and weight than a color selection article with a thickness similar to an artificial turf fiber and with a length and width that preferably do not exceed 10 cm. Thus, a sales representative may use a kit comprising a small number of artificial turf fiber samples for demonstrating the physical and mechanical properties of the fibers; this kit can comprise more than 20, and preferably more than 40, samples for demonstrating various options of the colors that could be ordered. Typically, the color palette offered by far exceeds the number of fiber types and fiber thicknesses available, so embodiments of the invention may provide for a compact but nevertheless exhaustive kit that enables a customer to select a fiber thickness and fiber color that suits his or her needs.

According to embodiments, the color selection article has a stepped shape profile. The profile comprises at least two steps. Each step corresponds to a defined thickness of the color selection article, and the first area corresponds to one of the steps. Thus, each area corresponding to a step is oriented parallel to the base area of the color selection article and represents a particular "level" and "thickness" of the color selection article.

This may be advantageous, because a single color selection article covers multiple degrees of transparency/opacity for a single particular color respectively corresponding to different fiber types and fiber thicknesses that may be offered by a manufacturer of artificial turf fibers. Thus, the customer gets a more realistic idea of the color of a variety of different artificial turf fiber types on offer.

Preferably, the system comprises multiple artificial turf fiber samples, each one comprising fibers of a particular thickness that is different from the fiber thickness of the artificial turf fibers in other artificial turf fiber samples. Preferably, each or at least some of the steps of the profile have a thickness in the range of plus/minus 20% of the thickness of one of the multiple artificial turf fiber samples.

This may be beneficial, because the potential customer can select a particular type of artificial turf fiber that has the desired elasticity and/or rigidity based on the artificial turf fiber samples and can also select the color of the fiber to be produced based on a color selection article whose thickness (and thus also transparency/opacity) is identical or similar to the thickness of the artificial turf fiber.

According to embodiments, the thickness of the artificial turf fiber of the one artificial turf fiber sample is between 100µm and 400µm.

According to embodiments, the stepped shape profile comprises at least three steps, corresponding to different thicknesses. The thickness is selected from a group comprising 100µm, 150µm, 200µm, 250µm, 300µm, 350µm, and 400µm.

According to embodiments, the injection-molded product is a high-pressure injection-molded product. For example, the injection molding can be performed at temperatures of above 210°C, preferably between 210°C and 265°C; e.g., 250°C. The injection molding can be performed at a pressure of 300-480 bar.

According to embodiments, the artificial turf fiber is to be made of a polymer referred to herein as an "extrusion polymer." The extrusion polymer is a polymer adapted for forming the artificial turf fiber in a process comprising an extrusion step. In particular, the extrusion polymer can be polyethylene or a mixture of polyethylene and polyamide.

According to embodiments, the injection-molded product is made of a polymer referred to herein as an "injection-molding polymer." Preferably, the injection-molding polymer is of the same type or a highly similar type of polymer as the extrusion polymer, e.g., polyethylene or polyamide or a mixture thereof.

According to embodiments, the injection-molding polymer is a modified version of the extrusion polymer, whereby the modification relates to the injection-molding polymer comprising one or more substances (additives) that are absent in the extrusion polymer or are contained in the extrusion polymer to a significantly (e.g., less than 50%) lower amount.

According to embodiments, the injection-molding polymer is a mixture of polymer granules of the same or a similar type of polymer as the extrusion polymer (e.g., PE granulates) and at least one additive. The at least one additive can comprise one or more additives for homogeneously dispersing the pigments in the polymer granules. In addition, or alternatively, the at least one additive can comprise one or more additives for reducing the viscosity of the mixture such that the mixture has a lower viscosity than the extrusion polymer. Preferably, the pigments and the additives are added as separate components into a mixer and the mixer generates a polymer granule, additive, and pigment mixture that ensures that the pigments are homogeneously mixed in the liquid polymer, which is mass-generated in the injection-molding process. Hence, preferably, the pigments are not provided already included the pigments ("masterbatch") for generating the color selection article.

For example, the additive for homogeneously dispersing the pigments in the polymer granules can be an oil, preferably a colorless oil, like colorless machine oil, "white oil," or similar oils, chalk, wax, or combinations thereof.

Using additives for homogeneously distributing the pigments may be highly advantageous, but also technically challenging in the context of producing a very thin injection-molded product from a polymer-pigment mixture where the pigments are added separately from the polymer granules (which is a prerequisite for rapid prototyping because if the pigments were added as a component of the polymer granules, it would be necessary to perform an extrusion step for creating the colored polymer granules and the color selection article production would be much slower). It should be noted that the homogeneous distribution of the pigments in a polymer mass to be extruded is typically not a problem because the pigments are added via a master batch consisting of colored polymer granules that can easily be mixed homogeneously with the pigment-free bulk polymer granules. However, the homogeneous distribution of a small amount of pigments in polymer granules for injection molding is technically highly difficult, because in a very thin mold, even minor inhomogeneities will lead to a spotty, irregular color pattern in the color selection article.

The use of oil may be beneficial, because oil may not only help homogeneously distribute the pigments in the mixture for injection molding, but may also reduce the viscosity of the mixture; however, other, preferably colorless additives that decrease the viscosity may be used.

According to embodiments, the injection-molding polymer and/or the extrusion polymer are selected from a group comprising polyethylene, ABS, polypropylene, polyoxmethylene, polycarbonate, nylon polymer material, and blends of any one of said polymers. Preferably, to reduce color changes induced by the polymer, the extrusion polymer and the injection-molding polymer basically consist of the same or a highly similar polymer type - e.g., PE that may differ slightly in respect to the length and number of branching; thus, the PE version used for injection molding has a lower viscosity than the PE version used for the extrusion.

According to embodiments, the injection-molded product is a high-pressure (300-480 bar) injection-molded product made of polyethylene.

In a further aspect, the invention relates to a method of producing a color selection article for selecting the color of an artificial turf fiber. The method comprises providing an injection mold. The mold has a shape adapted to form an injection-molded product comprising at least a first area having a thickness in the range of plus/minus 20% of the thickness of the artificial turf fiber. The method further comprises injecting a polymer comprising a defined amount of one or more first pigments into the mold for generating the color selection article in an injection-molding process.

According to embodiments, the mold is shaped such that the color selection article generated in the mold has a stepped shape profile. The profile comprises at least two steps. Each step corresponds to a defined thickness of the color selection article. The first area corresponds to the first step. The mold may have a second area that corresponds to a second step.

According to embodiments, the thickness of the artificial turf fiber is between 100µm and 400µm.

According to embodiments, the stepped shape profile comprises at least three steps, each one corresponding to a different thickness of the color selection article. The thicknesses are selected from the following choices: 100µm, 150µm, 200µm, 250µm, 300µm, 350µm, and 400µm.

According to embodiments, the injection-molding process is a high-pressure injection-molding process. According to some examples, the injection-molded product is a high-pressure injection-molded product consisting of at least 80% polyethylene, by weight. For example, the high-pressure injection-molding process can be performed at a pressure of 300-480 bar.

According to embodiments, the method further comprises generating a system for selecting the color of artificial turf fibers by combining the color selection article with one or more artificial turf fiber samples. The color selection article comprises at least a first area having a thickness in the range of plus/minus 20% of the fiber thickness of one of the one or more artificial turf fiber samples. In some embodiments, the color selection article comprises a second area having a thickness in the range of plus/minus 20% of the fiber thickness of a further one of the one or more artificial turf fiber samples.

In a further aspect, the invention relates to a method of producing an artificial turf fiber having a defined color. The method comprises generating a plurality of color selection articles in accordance with the method according to any one of the embodiments of the method of generating the color selection article described herein for embodiments and examples of the invention. Each generated color selection article comprises a unique amount and/or composition of the one or more first pigments that differs from the amount and/or composition of the first pigments in all others of the plurality of color selection articles. The method further comprises receiving a selection of one of the plurality of color selection articles and determining a defined amount of one or more second pigments adapted to colorize the artificial turf fiber to be created from an extrusion polymer such that the artificial turf fiber has the same color as the selected color selection article. The method further comprises generating an extrusion mixture by mixing the extrusion polymer with the determined amount of one or more second pigments. The method further comprises generating the artificial turf fiber. The generation comprises extruding the extrusion mixture into a monofilament or a film. The film can be further processed for transforming the film into slices. The generation further comprises transforming one or more of the monofilaments or one or more slices of the film into the artificial turf fiber.

Said features may be advantageous, because the type and amount of second pigments used for generating the artificial turf fiber are selected depending on the type and amount of first pigments used for generating the color selection article. Thereby, the type and amount of the first pigments may or may not be identical to the type and amount of the second pigments. The applicant has observed that in case the same amount and type of pigments used in a particular color selection article are used for manufacturing an artificial turf fiber, the color of the artificial turf fiber is often not identical to the color of the color selection article, at least in cases when the polymer used for the injection molding has significantly different optical properties than the polymer used in the extrusion process. However, the applicant has observed that the color shift caused by using another polymer for the extrusion process than for the injection-molding process is often predictable and can often be compensated by slightly modifying the pigment composition of the polymer mixture to be extruded. For example, the applicant has observed that modifying the amount and/or type of one or more of the pigments used for generating a color selection article in a specific manner can compensate for color shifts by using different polymers for the injection molding and the extrusion. By measuring the color of a plurality of different color selection articles and extruded artificial turf fibers and storing the colors according to the respectively used polymer-pigment combination, a data set can be created that enables a human or machine learning logic (MLL) to identify two or more different polymer-pigment combinations yielding the same color and/or to identify rules that specify how to modify the amount and/or type of pigment in order to compensate for any color shift induced by using a different polymer in the extrusion process than that used in the injection-molding process. Developing such rules may be particularly advantageous, because the rules may allow one to extrapolate and predict how a particular color shift can be compensated for even in case the original data set does not comprise a corresponding data point. For example, in case the addition of one part of a particular pigment to 100 parts of a particular polymer always reduces the brightness of the polymer by a particular number of scale units, then a generic rule may be created stating that the addition of one part of the particular pigment to 100 parts of the polymer will reduce the brightness of any color, such as green, blue, yellow, or red. It may happen that an extrapolated rule does not represent the real color shift 100% correctly, but nevertheless, the extrapolated rule may help identify a pigment composition that generates the color of a selected color selection article more quickly than without the use of the extrapolated rule. Moreover, any measured deviation of the predicted color of an artificial turf fiber from the actually measured color may be used to automatically or manually adapt and improve the rules.

According to embodiments, the determination is performed by computer-implemented color correction logic (e.g. a trained MLL or an explicitly coded software program) configured to associate each of a plurality of first combinations with a second combination. Each first combination is a combination of one or more defined amounts of first pigments and a polymer used for generating the color selection articles in an injection-molding process. Each second combination is a combination of one or more defined amounts of second pigments in an extrusion polymer used for generating the artificial turf fiber in an extrusion process. The association of a first with a second combination implies that the color of the color selection article generated from the first combination is identical to the color of the artificial turf fiber generated from the second combination.

Using a computer-implemented color correction logic for identifying polymer-pigment combinations generating the same color may be advantageous, because a program logic can typically process and analyze larger amounts of data than a human and can identify correlations and other forms of relationships that cannot be identified by a human. Furthermore, the program can be used for automatically predicting and correcting any color shift that may be caused by using a different polymer for the extrusion process than for the injection molding process.

According to embodiments, the color correction logic is a rules engine or a machine learning algorithm. Using a rules engine may have the advantage that the rules are explicit and may allow a user - e.g., via a user interface - to inspect and modify the rules. Using a machine learning logic may have the advantage that polymer-pigment combinations having the same color as well as pigment combinations that can compensate for a color shift induced by using a different polymer in the extrusion process can be identified and predicted more accurately. Typically, the ability of machine learning logic to identify and extract information from a training data set exceeds the capabilities of a human. Furthermore, a machine learning logic can easily be retrained if new empirical data becomes available. Thus, the maintenance and improvement of the program logic may be facilitated.

In a further aspect, the invention relates to a computer system comprising a processor, a display, and machine-readable instructions, which, when executed by the processor, cause the processor to perform a method comprising:
- receiving a selection of one of a plurality of color selection articles, the color selection articles being adapted for enabling a person to select a desired color of an artificial turf fiber;
- determining the color of the selected color selection article;
- determining a defined amount of one or more second pigments that is adapted to colorize the artificial turf fiber to be created from an extrusion polymer such that the artificial turf fiber has the same color as the determined color;
- determining a defined amount of one or more second pigments that is adapted to colorize the artificial turf fiber to be created from an extrusion polymer such that the artificial turf fiber has the same color as the selected color selection article; and
- outputting the determined amount of the one or more second pigments and, optionally, also the extrusion polymer, via the display.

An **"artificial turf fiber sample"** as used herein is a product that comprises one or more artificial turf fibers having a defined fiber thickness. For example, the artificial turf sample can consist of a single fiber, or a bundle of fibers, or of a piece of artificial turf comprising a plurality of fibers having the same fiber thickness. The sample is adapted to provide a human with an idea of the mechanical properties of the fibers and optionally also of the artificial turf to be produced - e.g., fiber elasticity, rigidity, fiber orientation and density, pile height, etc.

An **"injection-molded product"** as used herein is a product generated in a manufacturing process that comprises a step of injecting molten material, in particular a polymer or polymer mixture, into a mold. The polymer can be an elastomer or a thermoplastic and thermosetting polymer. The polymer material is fed into a heated barrel, mixed (using, e.g., a helical-shaped screw), and injected (forced) into a mold cavity, where it cools and hardens to the configuration of the cavity. Typically, the mold is made of metal, usually steel or aluminum. Injection molding is widely used for manufacturing a variety of parts - e.g., tools or automobile parts - but has not yet been used for the generation of color selection articles in the context of artificial turf fiber production.

A **"color selection article"** or "color selection sample" as used herein is a product, preferably a polymer-based product, with a material of known composition. In particular, the color selection article comprises a known amount of one or more pigments and a known amount of one or more polymers. Preferably, a color selection article is generated in a defined and reproducible process that enables the manufacture of many color selection articles of the same type and composition such that all said articles have the same, known, and empirically determined color. Preferably, a color selection article is a member of a color selection kit comprising many color selection articles of different colors. The color selection kit in some embodiments can in addition comprise one or more artificial turf fiber samples.

A **"color selection kit,"** also referred to herein as a "system," as used herein comprises one or more color selection articles and one or more artificial turf fiber samples. If the kit comprises multiple color selection articles, the color selection articles have different colors. If the kit comprises multiple artificial turf fiber samples, the samples preferably have different fiber thicknesses.

A **"pigment"** as used herein is a substance that changes the color of reflected or transmitted light. The term pigment as used herein should be interpreted broadly as any substance that changes the color of light - e.g., as the result of wavelength-selective absorption, as the result of fluorescence, phosphorescence, and other forms of luminescence, in which a pigment or the material interacting with the pigments emits light. Substances that humans have chosen and developed for use as pigments usually have special properties that make them ideal for coloring other materials. For example, many pigments have a high tinting strength relative to the material they color, are stable in solid form at a broad temperature range, and can be distributed homogeneously in other materials - in particular, polymers. The term "pigment" as used herein also encompasses dyes - i.e., substances that are soluble in a carrier solution.

An **"extrusion polymer"** as used herein is a polymer that is adapted for use in generating an artificial turf fiber in a manufacturing process that comprises an extrusion step. An artificial turf fiber must be sufficiently elastic as well as rigid in order to provide an artificial turf with the desired properties. An extrusion polymer can be a mixture of one or more extrusion polymers. For example, the extrusion polymer can be polyethylene (PE) or polyamide (PA) or a mixture thereof.

A **"modified extrusion polymer"** as used herein is an extrusion polymer that is supplemented with additional substances in order to modify the rheological properties of the polymer such that the viscosity of the modified extrusion polymer is low enough to allow using the modified extrusion polymer in an injection-molding process. For example, the additive can be an oil, in particular a colorless, transparent oil, e.g., a mineral oil or a plant oil.

An **"injection-molding polymer"** as used herein is a polymer that is adapted for use in generating a color selection article in a manufacturing process that comprises an injection-molding step. The polymer must melt at temperatures commonly used in injection molding - e.g., temperatures above 120°C, preferably above 200°C. In preferred embodiments, the injection-molding step is a high-temperature injection-molding step performed at temperatures in the range of 300-450°C. The polymer needs to be liquid and at the same time chemically stable at the temperature range used for performing the injection molding. Preferably, the injection and holding pressure is between 300 and 480 bar.

### Brief description of the drawings

In the following figures, these embodiments of the invention are explained in greater detail, by way of example only:
- Figure 1A: depicts a flowchart of a method of producing a color sample article for artificial turf.
- Figure 1 B: depicts a flowchart of a method of producing an artificial turf fiber of a particular, user-selected color.
- Figure 2: is a schematic drawing of a piece of artificial turf used as an artificial turf fiber sample.
- Figure 3: depicts photographs of an injection-molded product to be further processed and used as a color selection article.
- Figure 4: depicts an injection-molded product and the color selection article manufactured therefrom.
- Figure 5: depicts the injection-molded product and the color selection article manufactured therefrom from a different perspective.
- Figure 6: is a photograph of two transparent color selection articles that partially overlap each other.
- Figure 7: depicts a system comprising a color selection article with a stepped profile and two artificial turf fiber samples.
- Figure 8: illustrates the generation of multiple color selection articles, each having a different color.
- Figure 9: illustrates the computer-assisted manufacturing of artificial turf fiber having the color of a particular color selection article selected by a user.

### Detailed description

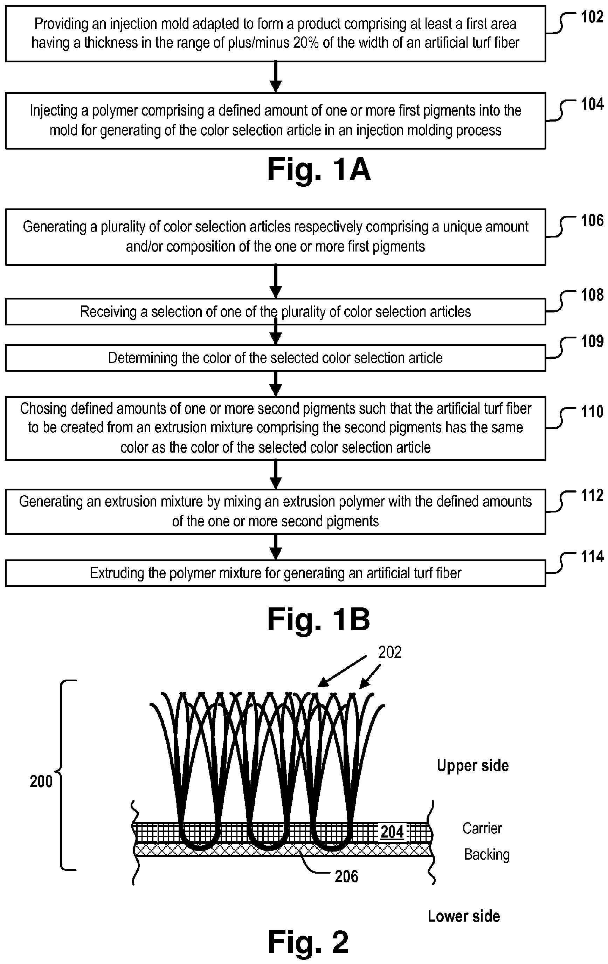

**Figure 1A** depicts a flowchart of a method of producing color samples 400, 602, 604, 702, 832, 834, and 836 for selecting the color of artificial turf fiber 202. The method will be described below, making reference to elements depicted in figures 2-9.

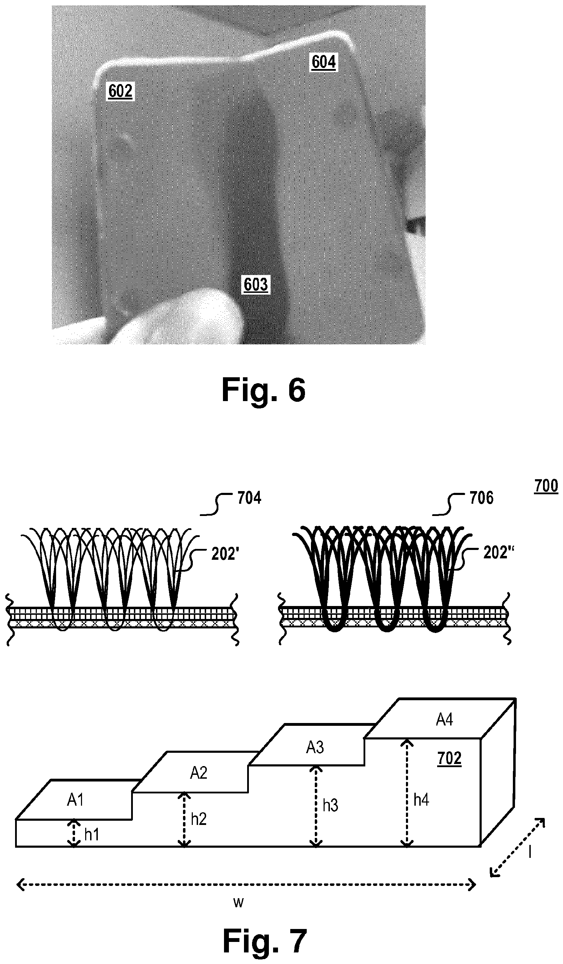

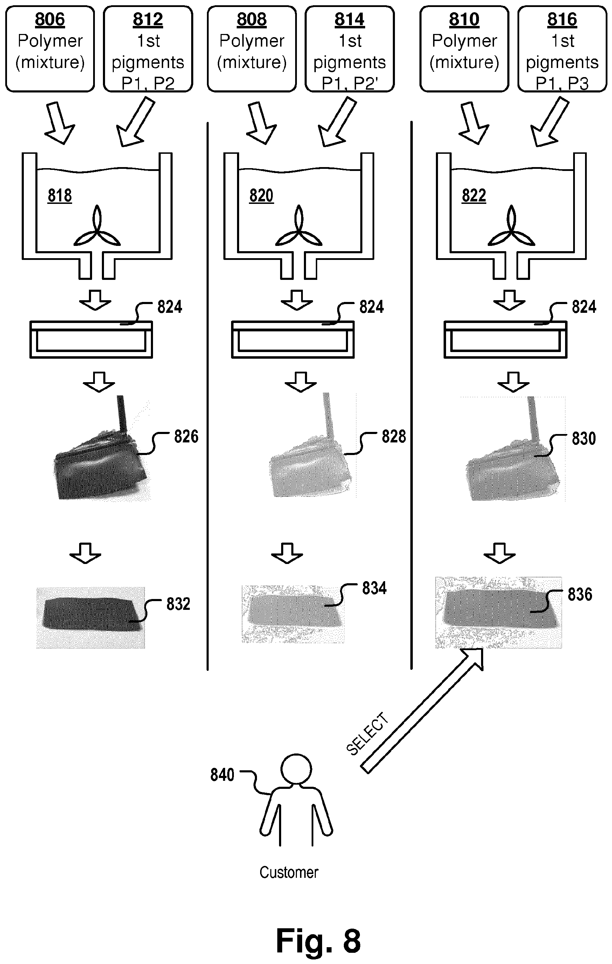

The method comprises step 102 of providing injection mold 824 as depicted, for example, in figure 8. The mold has a shape adapted to form an injection-molded product comprising at least a first area A1, A2, A3, A4 having a thickness h1, h2, h3, h4 in the range of plus/minus 20% of the fiber thickness of the artificial turf fiber. An example of a color selection article comprising a stepped profile with multiple areas, each corresponding to a different fiber thickness, is depicted in figure 7.

Next, in step 104, a polymer-pigment mixture comprising a defined amount of one or more polymers is adapted for injection molding, and one or more pigments are generated and injected into the mold. The polymer-pigment mixture comprises polymer granules, which are basically free of any pigment, and then one or more pigments of defined amounts, and one or more additives for reducing the viscosity of the mixture and/or for homogeneously distributing the one or more pigments in the mixture. Preferably, the mixture is homogeneously mixed by a shaker, not a stirrer. The shaking can be performed manually or by a machine. The mixing time depends on the type and amount of the pigments (the higher the mass and the higher the organic content, the longer the mixing time). The components of the mixture are mixed - i.e., shaken - until a basically homogeneously distributed mixture is generated. Typically, this is achieved within approximately five minutes.

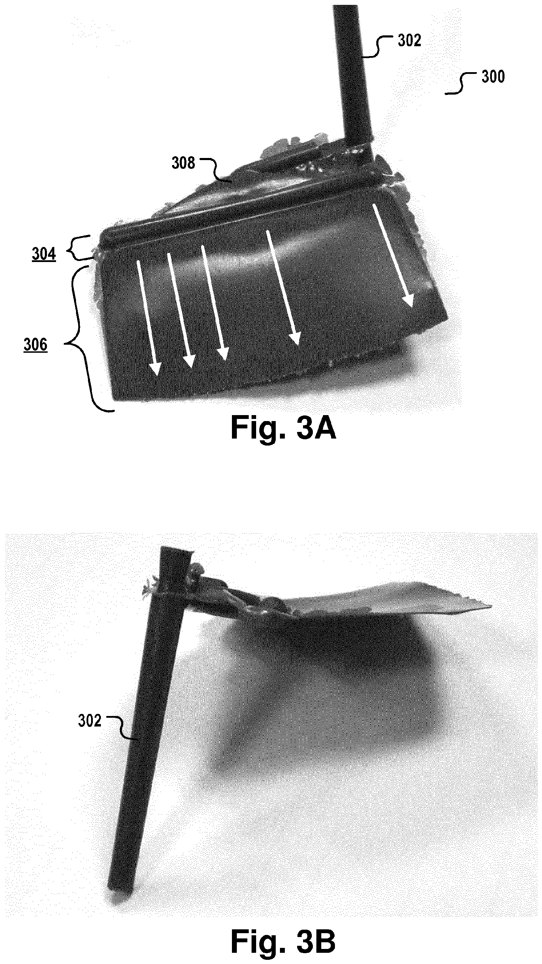

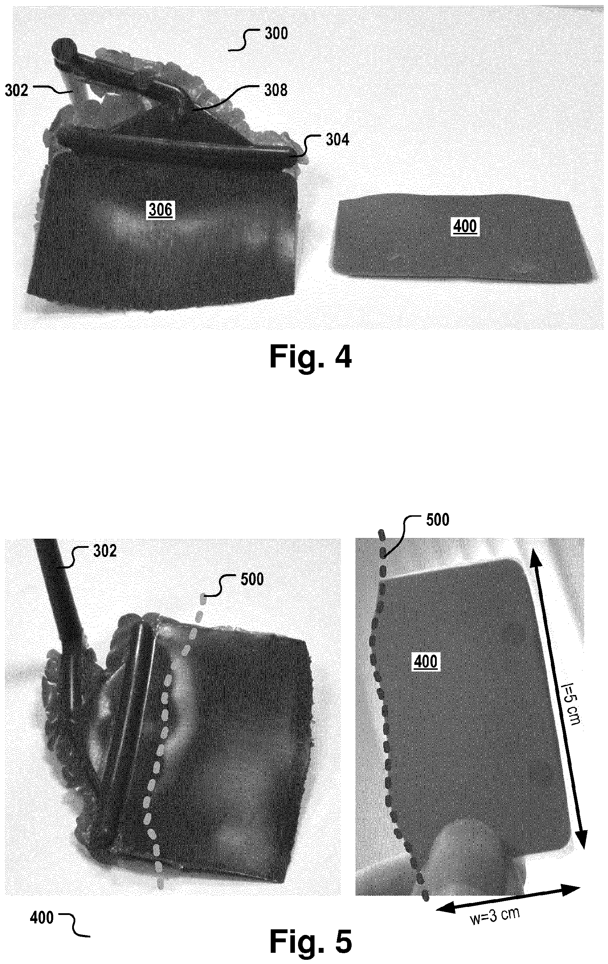

Preferably, the injection is performed in a high-temperature injection-molding operation. The injection can be performed via a duct illustrated by protrusion 302 of the color selection article depicted in figures 3 and 4. When the polymer has hardened, the injection-molded product is removed from the mold and further processed, in particular cut, to provide color selection article 400 as depicted in figures 4 and 5.

Thanks to the thickness of the color selection article, which is identical or similar to the artificial turf fiber to be produced, the color selection article is typically transparent, as can be seen, for example, in figure 6. This allows a user to select a color of an artificial turf fiber that is identical or highly similar to the color of the artificial turf fiber to be produced in the future without requiring the manufacturer of the artificial turf fiber to produce many different fibers of different colors in an extrusion process, thereby saving time and cost.

**Figure 1B** depicts a flowchart of a method of producing an artificial turf fiber of a particular, user-selected color.

First, in step 106, a plurality of color selection articles - 400, 602, 604, 702, 832, 834, and 836 - are produced in a method as described, for example, in figure 1A. Each generated color selection article comprises a unique amount and/or composition of one or more first pigments - 812, 814, 816.

In embodiments where the polymer used for the injection molding and that used for the extrusion are identical or highly similar, the same amount and type of pigments relative to the pigment-free polymer can be used for generating the color selection article and the fibers.

In embodiments where the polymer used for the injection molding and that used for the extrusion are different - e.g., the extrusion polymer is PE and the injection-molded product is polypropylene - or in cases where any additive has an influence on the color, the amount and/or composition of the first pigments of any one of the color selection articles may differ from the amount and/or composition of the first pigments in all others of the plurality of color selection articles.

In the following, it will be assumed that the amount and/or composition of the first pigments of any one of the color selection articles differ from the amount and/or composition of the first pigments in all others of the plurality of color selection articles. In this case, this difference may be compensated by a software-based selection of different pigments or different amounts of pigments, as described below.

Next, in step 108, a selection of one of the plurality of color selection articles is received. For example, a customer may have selected a particular color selection article and informed a field representative of an artificial turf fiber manufacturer of his or her decision. Alternatively, the customer may communicate an article number or ID of the selected color selection article via mail or via the Internet to the manufacturer. Then, an employee of the manufacturer may enter the article number or ID of the color selection article selected by the customer into a software program 914 that comprises or has access to an association 915 of many different polymer-pigment combinations that provide for a particular color. In addition, or alternatively, the program logic receiving the selection of the customer 914 can be adapted to identify a particular pigment combination that is adapted to compensate for any color modifications by using an extrusion polymer 902 that differs from the polymer used for generating the color selection article selected by the customer.

Next, in step 109, the software 914 identifies the color of the selected color selection article 836 and identifies, to assist with step 110, one or more second pigments that are adapted to produce, if mixed into one or more polymers to be used in an extrusion process, an artificial turf fiber having a color that is identical to the color identified in step 109. The exact composition of the polymer-pigment mixture 906 that is adapted to create an artificial turf fiber having the desired color identified in step 109 can be displayed on a computer system 910 screen to a user 924 to enable the user to create in step 112 the mixture 906. Alternatively, the exact composition of the polymer-pigment mixture 906 can be communicated to an extrusion machine comprising a mixing unit that creates the mixture 906 fully automatically.

Next, in step 114, the polymer mixture 906 is extruded into a monofilament or film. The film can be split into multiple polymer slices. The monofilaments or slices can be further processed - e.g., stretched and/or texturized and/or combined into bundles of processed slices or monofilaments for generating artificial turf fibers 202.

**Figure 2** shows a cross-section of a piece of artificial turf 200 used as an artificial turf fiber sample. The artificial turf fiber sample 200 comprises an artificial turf backing 206 and a carrier 204 - e.g., a synthetic fiber mesh. The backing can be, for example, a hardened polyurethane or latex mixture that incorporates some portions of the fibers protruding to the lower side of the artificial turf. In some embodiments, the artificial turf fibers 202 have been tufted, knitted, or weaved into the carrier 204. The artificial turf fibers 202 are shown as extending a distance above the carrier. In other embodiments (not shown), the artificial turf fiber sample consists merely of a single artificial turf fiber of a particular thickness or of a bundle of artificial turf fibers having the same thickness. Thus, an artificial turf fiber sample should enable a potential customer to get an impression of the thickness, elasticity, and rigidity of an artificial turf fiber, but not necessarily of the color. In cases where the artificial turf fiber sample is a piece of artificial turf, the potential customer may in addition get an impression of fiber density, fiber distribution, fiber integration tilt, pile height, and overall weight of the artificial turf.

**Figures 3A and 3B** are two photographs of an injection-molded product 300 taken from two different perspectives. The product 300 has been freshly removed from an injection mold and still comprises some edges and frayings that need to be removed. As the profile of the mold corresponds to the profile of the injection-molded product generated therein, the features of the injection-molded product as well as corresponding features of the mold will be described by making reference only to the depicted injection-molded product 300.

The injection-molded product 300 comprises a protrusion 302 that corresponds to an inbound duct used for injecting a liquid polymer via said duct into the mold. The product 300 further comprises a tubular thickening 304 that corresponds to a respective tubular thickening of the mold and that allows the injected liquid polymer to quickly and homogeneously spread via the thickening over the whole width of the mold before it enters the body of the mold. The body of the mold forms the body 306 of the injection-molded product 300. The mold and the injection-molded product 300 generated therein can further comprise a region 308 between the duct 302 and the ends of the tubular thickening 304 that allows the injected liquid polymer to quickly leave the duct and homogeneously spread over the whole width of the thickening 304. For example, the region 308 can be a triangle-shaped region.

According to preferred embodiments, the body of the mold and the corresponding body 306 of the injection-molded product 300 have a tapering shape - e.g., the shape of a wedge or of a stair comprising two or more steps of different heights. Thereby, the side/edge of the body 306 connecting to the tubular thickening 304 are higher (thicker) than the edge of the body 306 opposed to the thickening 304. This may be advantageous, as the shape of the body of the mold and the thickened duct (corresponding to thickening 304) directly connected to an inbound duct (corresponding to protrusion 302) contained in the mold may cause the injected liquid polymer to spread within the mold in a basically laminar flow, as indicated by the parallel white arrows. This may be advantageous, as the flow of the liquid polymer within the injection mold "simulates" the basically laminar flow of an extruded polymer mass. In some embodiments, the orientation of the flow of the polymer mass during the extrusion has an impact on the appearance of the surface of an artificial grass fiber. For example, the pigments in an extrusion mixture may not be homogeneously mixed to produce an extrusion product used for generating a marbled artificial turf fiber. In this and other cases, it may be beneficial to provide a mold whose profile forces the injected polymer mass to fill the mold in a laminar movement. Preferably, the temperature and pressure of the injection-molding process are chosen such that the injected polymer mass hardens immediately after the whole form is filled, to avoid a turbulent movement of the liquid polymer within the mold.

According to some embodiments, the polymer-pigment composition used for the injection molding comprises at least two different pigments of different colors, which are inhomogeneously distributed within the composition. For example, the polymer-pigment composition used for the injection molding for generating a color selection article could be a two-phase or multiphase polymer mixture wherein the different pigments are confined to different phases. Likewise, the polymer-pigment composition used for the extrusion process for generating an artificial turf fiber of a desired color could be a two-phase or multiphase polymer mixture wherein the different pigments are confined to different phases.

**Figures 4 and 5** depict the injection-molded product 300 of figure 3 in different perspectives and a color selection article 400 manufactured therefrom, respectively. The article 400 is generated by cutting the injection-molded product 300 along the separation line 500 indicated in figure 5. According to some examples, the color selection article 400 has a length of about 3-8 cm, a width of about 2-5 cm, and a height (or "thickness") of about 100-500 µm. In some example embodiments, the thickening 304 and the corresponding duct in the mold have a diameter of 0.2-0.8 mm, preferably 0.3-0.6 mm.

**Figure 6** is a photograph of two transparent color selection articles 602, 604 that are held against a light source. As can be inferred from the significantly darker portion 603 of the articles where the two articles partially overlap each other, the thickness of the articles is small enough to let at least some light traverse the articles. Thus, the color selection articles in some embodiments are transparent. This may be advantageous, as it allows a customer to get a more realistic idea of the color and appearance of the artificial turf fiber that will be produced if he or she selects a particular color selection article, because the color selection article has the same thickness and transparency as the artificial turf fiber to be created based on the color selection of the customer.

**Figure 7** depicts a system 700 comprising a color selection article 702 with a stepped profile and two artificial turf fiber samples 704, 706. The height ("thickness") (h1) corresponding to area A1 may be 100µm, the height (h2) corresponding to area A2 may be 150µm, the height (h3) corresponding to area A3 may be 200µm, and the height (h4) corresponding to area A4 may be 250µm. According to some embodiments, the length I of the article 702 is about 3-8 cm and the width w is about 2-5 cm.

The artificial turf fiber sample 704 can be a piece of artificial turf comprising artificial turf fibers 202, having a thickness of only 150µm. This sample 704 can be used to provide a potential customer with an idea of the elasticity, rigidity, orientation, and density of the artificial turf fibers offered by a manufacturer. However, this sample 704 is not used for enabling the customer to select a particular color, as it may not be possible or at least not convenient to produce an artificial turf fiber sample for each and every pigment combination that may be used for colorizing an artificial turf fiber. However, the user may use the area A2 of one or more color selection articles to get an idea of the color of the artificial turf fibers 202' if he or she would select the color of the color selection article 704 as the color of the fiber to be produced. The thickness h2 of the color selection article 702 is 150µm and thus is identical or very similar to the thickness of the artificial fiber sample 704. In particular, it will have the same degree of transparency as the fiber 202' of the artificial turf fiber sample 704.

The artificial turf fiber sample 706 can be a piece of artificial turf comprising artificial turf fibers 202", having a thickness of about 250µm. This sample 706 can be used to provide a potential customer with an idea of the elasticity, rigidity, orientation, and density of the artificial turf fibers of this thickness, which may also be offered by the manufacturer. The sample 706 is not used for enabling the customer to select a particular color but is rather used for enabling the customer to get an idea of the color of the artificial turf fibers 202," if he or she would select the color of the color selection article 706 as the color of the fiber to be produced. The thickness h4 of the color selection article 702 is 250µm and thus is identical or very similar to the thickness of the artificial fiber sample 706. In particular, it will have the same degree of transparency as the fiber 202" of the artificial turf fiber sample 706.

**Figure 8** illustrates the generation of multiple color selection articles 832, 834, 836 each having a different composition of pigments and a different color.

For example, in order to create a first color sample article 832 having a first color, e.g., dark green, an injection-molding polymer-pigment mixture 818 is created by mixing one or more polymers 806 and one or more first pigments 812 with each other. The one or more first pigments have a defined amount and composition that may be stored in combination with the type and relative amount of the polymer 806 in a database or other data storage system. For example, the first pigments 812 can consist of an amount A1 of a pigment P1 and an amount A2 of a pigment P2. The polymer 806 can be an injection-molding polymer - e.g., PVC or PE supplemented with one or more additives. The polymer-pigment mixture 818 is injected into a mold 824 in a high-pressure injection-molding process. After the injected polymer-pigment mixture 818 has cooled off and hardened, the mold is opened and the injection-molded product 826 is removed from the mold. Then, the injection-molded product is further processed and cut to provide a color selection article 832, as illustrated in greater detail in figure 5.

In order to create a second color sample article 834 having a second color, e.g., bright green, an injection-molding polymer-pigment mixture 820 is created by mixing one or more polymers 808 and one or more first pigments 814 with each other. The pigments can be added as a powder. The pigments are not provided as pigment-bearing polymer granules, as the generation of pigment-bearing granules would require an additional, time-consuming mixing, heating, extruding, and granulate-generating process that would significantly slow down the color selection article manufacturing process. The one or more first pigments 814 have a defined amount and composition that are stored in combination with the type and relative amount of the polymer 808 in the database or other data store. For example, the first pigments 814 can consist of the same amount A1 of the pigment P1 as used for creating the article 832 and of an amount A2 of a pigment P2. Thus, the different colors of article 832 and 834 may be caused by different amounts of the pigment P2. The polymer 808 is the same polymer as the polymer 806 used for manufacturing color selection article 832. The polymer-pigment mixture 820 is injected into a mold 824 in a high-pressure injection-molding process and processed as described above for providing the color selection article 834 having the second color.

In order to create a third color sample article 836 having a third color, e.g., grass-green, an injection molding polymer-pigment mixture 822 is created by mixing one or more polymers 810 and one or more first pigments 816 with each other. The one or more first pigments 816 have a defined amount and composition that are stored in combination with the type and relative amount of the polymer 810 in the database or other data storage system. For example, the first pigments 816 can consist of the same amount A1 of the pigment P1 as used for creating the article 832 and of an amount A3 of a pigment P3. Thus, the different colors of article 832 and 836 may be caused by different types of pigments combined. The polymer 810 is the same polymer as the polymer 806, used for manufacturing color selection article 832. The polymer-pigment mixture 822 is injected into a mold 824 in a high-pressure injection-molding process and processed as described above for providing the color selection article 836 having the third color.

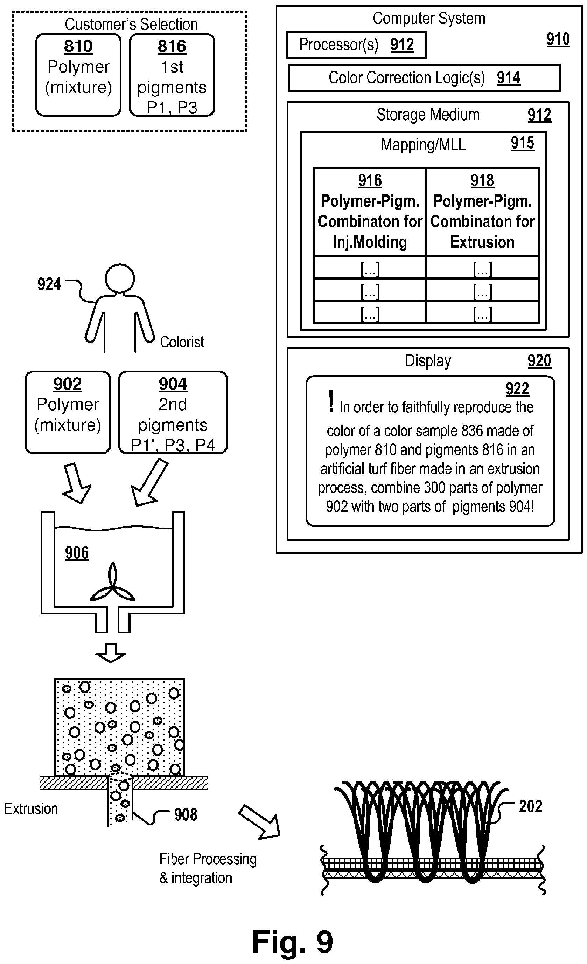

A customer 840 may now examine a plurality of color selection articles 832, 834, 836 having different colors, e.g., by holding the articles against a light source. The customer may also compare and evaluate artificial turf fiber samples in order to identify turf fibers of a desired thickness and for re-examining selectively those color selection articles or color selection article areas whose thickness corresponds to the fiber thickness of the preferred artificial turf fiber sample. Then, the customer may select one color 836 of a plurality of color selection articles 832, 834, 836 and order artificial grass having desired dimensions, a desired fiber type and thickness, and the same color as the color selection article 836. The production of an artificial turf fiber having the third color of article 836 selected by the customer is illustrated in figure 9.

**Figure 9** illustrates the computer-assisted manufacturing of an artificial turf fiber 202 having the color of a particular color selection article 836 that was selected by a user 840.

In the example depicted in figure 9, a customer 840 has selected a color selection article 836 that corresponds to a polymer-pigment mixture 822 comprising a polymer 810 and a defined amount of first pigments P1, P3 816. As mentioned above, the polymer 810 can be an injection-molding polymer, e.g., PVC, or an extrusion polymer (e.g., PE) supplemented with an additive. However, the polymer 902 that is to be used to generate the artificial turf fiber is a different type of polymer than is used for the injection molding, because the polymer 902 is optimized for an extrusion process. The polymer 902 can be a single polymer, e.g., PE, or a mixture of different polymers, e.g., a mixture of PE and PA.

Hence, the problem now is that if the first pigments 816 would simply be mixed with a corresponding amount of extrusion polymer 902 rather than the polymer 810 used for generating the color selection article 836, then the color of the resulting artificial turf fiber 202 would differ from the color of the color selection article 836. This is because the different types of polymers or polymer mixtures have an influence on the color of the generated fiber and thus may modulate the color provided by the pigments 816.

This problem may be overcome by measuring and storing the color of many different types of artificial turf fibers in association with the combination of one or more polymers and pigments used for generating the respective fiber. For example, the amounts of one or more extrusion polymers and one or more pigments used for generating a particular artificial turf fiber and optionally also the thickness of the fiber can be stored in a first data repository - e.g., a first table of a relational database.

In addition, the color of many different color selection articles 832, 834, 836 is measured using the same color measuring device. Then the color of the color selection articles is stored in association with the combination of one or more polymers and pigments used for generating the respective color selection article. For example, the amounts of one or more injection-molding polymers and one or more pigments used for generating a particular color selection article and optionally also the thickness of the article or area of the article where the color was measured are stored in a second data repository - e.g., a second table of a relational database.

For example, the color measured for the artificial turf fiber and for the color selection article can be represented in a color space - e.g., the RGB color space, the CMYK color space, the HSL (Hue, Saturation, Lightness) color space, or the HSV (Hue, Saturation, Value) color space. Any color shift caused by using an extrusion polymer rather than, e.g., an injection-mold polymer, or caused by using a different polymer or pigment composition can be expressed in a shift of color coordinates within the color space.

Then, an association 915 between polymer-pigment combinations 916 used for generating respective color selection articles and polymer-pigment combinations 918 used for generating respective artificial turf fibers is generated and stored in a third data repository - e.g., in an association table of a relational database. The association 902 selectively assigns polymer-pigment combinations used for generating a color selection article and polymer-pigment combinations used for generating an artificial turf fiber if the two assigned combinations basically produce the same or a highly similar color.

According to some embodiments, the association 915 is created manually. For example, a company generating artificial turf fibers may produce a large number of hundreds or even thousands of color selection articles. As the color selection articles are generated using injection molding, the generation of the color selection articles can typically be performed quickly, using only small amounts of pigments and polymers. The generation of artificial turf fibers of different colors is typically much more demanding, but often a company may over the years have already produced many hundreds of types of artificial turf fibers with different polymers, polymer mixtures, pigment mixtures, and colors. By measuring the color of the color selection articles and the already produced artificial turf fibers, and by identifying polymer-pigment combinations generating the same color, a large mapping table can be created that may not cover all but at least many colors that may be of interest to a customer.

According to some other embodiments, the association 915 is created semiautomatically. For example, in a first step, a mapping table may be created manually, as described in the above paragraph. Then, a human user or a computer-implemented program logic evaluates the assignments and determines heuristics that describe the shift of colors caused by using a different polymer 902 for fiber generation than for generating the color selection article. For example, the human user or the program logic may compare the color differences of color selection articles and artificial turf fibers that comprise identical amounts and types of pigments and differ only in respect to the polymers or in respect to the presence of additives (which are not pigments). The comparison may reveal that using PE rather than PVC as a polymer may modify the color to a certain degree.

For example, if the color is represented in the HSL color space, the use of PE rather than PVC may reduce the hue value while leaving saturation and lightness basically unaffected. As a result of the comparison, a heuristics (H1) may be manually or automatically generated, like *"if the polymer-pigment combination used for generating a color selection article CSA1 in an injection-molding process is {PVC, P1, P3} and if the polymer-pigment combination used for generating an artificial turf fiber F1 in an extrusion process is {PE, P1, P3}, then the color C2 of the artificial turf fiber will be a color having the same saturation and lightness as the color C1 of the color selection article, whereby C2 has a hue value that is 20 units below the hue value of C1."*

In case this effect is observed also for other pigment combinations, e.g., *{PVC, P1, P4} and {PE, P1, P4}, or {PVC, P1, P2, P4} and {PE, P1, P2, P4},* as a result of the comparison, an even more generic heuristics (H2) may be manually or automatically generated, like *"if the polymer used for generating a color selection article CSA2 in an injection-molding process is {PVC} and if the polymer used for generating an artificial turf fiber F1 in an extrusion process is {PE}, and if the pigments used are identical, then the color C2 of the artificial turf fiber will be a color having the same saturation and lightness as the color C1 of the color selection article, whereby C2 has a hue value that is 20 units below the hue value of C1."*

According to another example, not only the polymer but also the pigment composition of the polymer-pigment combination used for generating the color selection article and the polymer-pigment combination used for generating the artificial turf fiber may differ from each other, but, nevertheless, identical or highly similar colors of a color selection article and an extruded fiber may be obtained. For example, it may be the case that the modification in the combination of pigments compensates the color shift effect caused by the use of a different polymer or polymer mixture. In this case, as a result of the comparison, a heuristics (H3) may be manually or automatically generated, like *"if the polymer-pigment combination used for generating a color selection article CSA3 in an injection-molding process is {PVC, pigment P1, and pigment P3} and if the polymer-pigment combination for generating an artificial turf fiber F3 in an extrusion process is {PE, modified amount pigment P1, pigment P3, and pigment P4}, then the color of the resulting color selection article will be identical or very similar to the color of the artificial turf fiber."* For example, a "very similar" color could be defined as a color deviating in no dimension of the used color space by more than a predefined number of units, e.g., 20 units or 10 units.

If the color-shift compensating effect of modifying the amount of P1 and adding a particular amount of P4 is observed not only for the polymers PVC-PE but also, e.g., for the polymers polypropylene-PE, then a more generic heuristics (H4) may be manually or automatically generated, like *"if the polymer-pigment mixture used for generating a color selection article CSA4 in an injection-molding process is {PVC or PP, P1, P3} and the pigment mixture used for generating an artificial turf fiber F4 in an extrusion process is {PE, P1, P3, P4}, then the color of the artificial turf fiber will be a color that is identical or very similar to the color selection article."*

According to some embodiments, a software program analyzes the available information regarding the color and polymer-pigment combinations of various color selection articles and artificial turf fibers for extracting a plurality of heuristics as exemplified by the heuristics H1-H4 mentioned above. The identified heuristics can be automatically or manually transformed into a set of rules that can be used for automatically predicting - given a selected color selection article having a known polymer-pigment combination and color, and given a preferred polymer (e.g., PE) to be used for generating an artificial turf fiber - the amount and type of pigments that have to be added to this preferred polymer in order to produce an artificial turf fiber whose color is identical or very similar to the color of the selected color selection article. For example, the software program can comprise a graphical user interface (GUI) allowing a user, e.g., a colorist 924, to enter an identifier of a selected color selection article 836 or to enter the color and polymer-pigment composition of the selected color selection article. Optionally, the user may also enter the type of polymer that is to be used for generating the artificial turf fiber in an extrusion process. For example, the polymer can be PE or a combination of certain amounts of PE/PA. It is also possible that the preferred polymer or polymer composition to be used for generating the artificial turf fiber is preconfigured in the software program. The software program then uses the association 915 in order to identify one or more second pigments and the respective amounts that would, if added to the preferred polymer, generate an artificial turf fiber having the same color as or a highly similar color to the selected color selection article. For example, the use of the assignment 915 can be implemented such that an assignment table stored in a database is accessed and evaluated by the software program. In another example, the use of the assignment 915 can be implemented such that the assignment is incorporated into a plurality of rules that encode heuristics adapted to identify polymer-pigment compositions that are suitable for extrusion and are adapted to create an artificial turf fiber having the desired color of the selected color selection article. In addition, or alternatively, the heuristics can be adapted to identify one or more pigments and respective amounts adapted to create, if added to the preferred polymer, e.g., PE, an artificial turf fiber having the desired color.

According to further embodiments, the assignment 915 is created semiautomatically or fully automatically in a machine learning process. For example, the user may provide information on polymer-pigment combinations 916, 918 and respective colors as a training data set. Then, machine learning logic (MLL) is trained on the training data set. Thereby, the machine learning logic implicitly learns some assignments 915 of polymer-pigment combinations 916, 918 having the same or highly similar colors. For example, support vector machines or neural networks can be used for learning the assignment 915. Using machine learning logic may have the disadvantage that the assignments 915 may be learned only implicitly, not explicitly, and therefore the MLL may operate as a "black box." However, using machine learning logic may have the great advantage that the implicitly learned associations and heuristics may be much more sophisticated than the heuristics that can be identified by a human observer. Furthermore, the MLL can easily be adapted and improved by retraining the MLL on a new training data set once new data becomes available. Furthermore, MLL may be able to identify associations and heuristics that are too complex for a human to identify.

In the example depicted in figure 9, the colorist 924 enters an identifier of a color selection article 836 selected by a customer 840 via a GUI of a software program 914 that is displayed on a screen 920 of a computer system 910. The computer system comprises one or more processors 912 and a software program 914 adapted to access the assignment 915 and use the assignment for identifying one or more second pigments 904, which, if combined with a particular extrusion-polymer 902, would provide an artificial turf fiber 202 that has the same color and preferably also other optical properties (like transparency) as the selected color selection article 836. In other words, the software program 914 uses the assignment 915 to identify a particular polymer-pigment combination 918 that would provide an artificial turf fiber 202 having the same or very similar color as the selected color selection article 836. In the depicted embodiment, the identified polymer-pigment combination is displayed on the screen 920 in a message 922. The message may comprise a specification of the specific type and amounts of the polymer(s) and pigment(s) to be combined in order to create fiber 202 of the desired color. The colorist 924 or another person or a machine may then generate a polymer-pigment mixture 906 comprising the ingredients indicated in the message 922. The mixture 906 is extruded into a film or a monofilament 908 that is then further processed into an artificial turf fiber 202 having the desired color.

### List of reference numerals

- 102-114: steps
- 200: artificial turf fiber sample
- 202: artificial turf fibers
- 204: carrier
- 206: backing
- 300: injection-molded product
- 302: protrusion corresponding to the inbound duct of the mold
- 304: tubular thickening
- 306: body of the injection-molded product
- 308: triangle-shaped region between the duct 302 and the ends of the tubular thickening 304
- 400: color selection article
- 500: separation line
- 602: color selection article
- 603: overlap zone
- 604: color selection article
- 700: system
- 702: color selection article with stepped profile
- 704: artificial turf fiber sample
- 706: artificial turf fiber sample
- 806: polymer for injection molding
- 808: polymer for injection molding
- 810: polymer for injection molding
- 812: first pigments P1, P2
- 814: first pigments P1, P2'
- 816: first pigments P1, P3
- 818: injection-molding mixture
- 820: injection-molding mixture
- 822: injection-molding mixture
- 824: injection mold
- 826: injection-molded product having a first color
- 828: injection-molded product having a second color
- 830: injection-molded product having a third color
- 832: color selection article having the first color
- 834: color selection article having the second color
- 836: color selection article having the third color
- 840: customer
- 902: polymer for extrusion
- 904: second pigments P1', P3, P4
- 906: extrusion mixture
- 908: extruded monofilament
- 910: computer system
- 912: one or more processors
- 914: color selection/correction program logic
- 915: assignment (mapping and/or machine learning logic)
- 916: polymer-pigment combination for injection molding
- 918: polymer-pigment combination for extrusion
- 920: display
- 922: message
- 924: colorist

## Claims

1. A system (700) comprising one or more artificial turf fiber samples (704, 706) and a color selection article (400, 602, 604, 702, 832, 834, 836) for selecting the color of an artificial turf fiber (202), the color selection article being an injection-molded product comprising a defined amount of one or more first pigments (812, 814, 816) and at least a first area (A1, A2, A3, A4) having a thickness (h1, h2, h3, h4) in the range of plus/minus 20% of the fiber width of one of the one or more artificial turf fiber samples.

2. The system of claim 1, the color selection article having a stepped shape profile comprising at least two steps, each step corresponding to a defined thickness of the color selection article, the first area corresponding to one of the steps.

3. The system of any one of the previous claims, the thickness of the artificial turf fiber of the one artificial turf fiber sample being between 100µm and 400µm.

4. The system of any one of the previous claims 2-3, the stepped shape profile comprising at least three steps respectively corresponding to a different thickness, the thicknesses being selected from a group comprising 100µm, 150µm, 200µm, 250µm, 300µm, 350µm, and 400µm.

5. The system of any one of the previous claims, the injection-molded product being a high-pressure injection-molded product generated at pressures of 300-480 bar.

6. The system of any one of the previous claims, wherein the polymer to be used for manufacturing the artificial turf fiber - the "extrusion polymer" - is a polymer adapted for forming the artificial turf fiber in a process comprising an extrusion step.

7. The system of any one of the previous claims, the injection-molded product being made of a polymer referred to as "injection-molding polymer," wherein the injection-molding polymer is a polymer adapted for forming the color selection article in the injection-molding operation.

8. The system of claim 7, the injection-molding polymer being a mixture of:
- polymer granules of the same type of polymer as the extrusion polymer; and
- at least one additive, the at least one additive being:
∘ an additive for homogeneously dispersing the pigments in the polymer granules; and/or
∘ an additive for reducing the viscosity of the mixture such that the mixture has a lower viscosity than the extrusion polymer.

9. The system of any one of claims 6-8, the injection-molding polymer and/or the extrusion polymer being selected from a group comprising: polyethylene, ABS, polypropylene, polyoxmethylene, polycarbonate, nylon polymer material, and blends of any one of said polymers.

10. The system of any one of the previous claims 7-10, the additive for homogeneously dispersing the pigments in the polymer granules being selected from the group comprising a colorless oil, chalk, wax, or combinations thereof.

11. The system of any one of the previous claims, the injection-molded product consisting of at least 80% by weight of polyethylene.

12. A method of producing a color selection article (400, 602, 604, 702, 832, 834, 836) for selecting the color of an artificial turf fiber (202), comprising:
- providing (102) an injection mold (824), the mold having a shape adapted to form an injection-molded product comprising at least a first area (A1, A2, A3, A4) having a thickness (h1, h2, h3, h4) in the range of plus/minus 20% of the fiber thickness of the artificial turf fiber; and
- injecting (104) a polymer comprising a defined amount of one or more first pigments (812, 814, 816) into the mold for generating the color selection article in an injection-molding process.

13. The method of claim 12, the mold being shaped such that the color selection article (702) generated in the mold has a stepped shape profile comprising at least two steps, each step corresponding to a defined thickness of the color selection article, the first area corresponding to one of the steps.

14. The method of any one of the previous claims 12-13, the thickness of the artificial turf fiber being between 100µm and 400µm.

15. The method of any one of the previous claims 12-14, the polymer being injected into the mold by injecting a mixture into the mold, the mixture comprising:
- polymer granules of the same type of polymer as an extrusion polymer to be used for generating the artificial turf fiber whose color is to be selected via the color selection sample; and
- at least one additive, the at least one additive being:
∘ an additive for homogeneously dispersing the pigments in the polymer granules; and/or
∘ an additive for reducing the viscosity of the mixture such that the mixture has a lower viscosity than the extrusion polymer.

16. A method of producing an artificial turf fiber having a defined color, the method comprising:
- generating (106) a plurality of color selection articles (400, 602, 604, 702, 832, 834, 836) in accordance with the method according to any one of claims 12-16, each generated color selection article comprising a unique amount and/or composition of the one or more first pigments (812, 814, 816) that differs from the amount and/or composition of the first pigments in all other ones of the plurality of color selection articles;
- receiving (108) a selection of one of the plurality of color selection articles;
- determining (110) a defined amount of one or more second pigments (904) that is adapted to colorize the artificial turf fiber to be created from an extrusion polymer (902) such that the artificial turf fiber has the same color as the color of the one selected color selection article;
- generating (112) an extrusion mixture (906) by mixing the extrusion polymer (902) with the determined amount of the one or more second pigments (904); and
- generating (114) the artificial turf fiber, the generation comprising extruding the extrusion mixture into a monofilament or a film and transforming one or more of the monofilament or one or more slices of the film into the artificial turf fiber.

17. The method of claim 16, the determining (110) being performed by a computer-implemented color correction logic (914) configured to associate each of a plurality of first combinations (916) with a second combination (918),
- wherein each first combination is a combination of one or more defined amounts of first pigments and a polymer (806, 808, 810) used for generating the color selection articles in an injection-molding process;
- wherein each second combination is a combination of one or more defined amounts of second pigments in an extrusion polymer used for generating the artificial turf fiber in an extrusion process; and
- wherein the association of a first with a second combination implies that the color of the color selection article generated from the first combination is identical to the color of the artificial turf fiber generated from the second combination.

18. A computer system (910) comprising a processor, a display (920), and machine-readable instructions (914), which, when executed by the processor (912), cause the processor to perform a method comprising:
- receiving (108) a selection of one of a plurality of color selection articles (400, 602, 604, 702, 832, 834, 836), the color selection articles being adapted for enabling a person to select a desired color of an artificial turf fiber;
- determining (109) the color of the selected color selection article;
- determining (110) a defined amount of one or more second pigments (904) that is adapted to colorize the artificial turf fiber to be created from an extrusion polymer (902) such that the artificial turf fiber has the same color as the determined color;
- determining (110) a defined amount of one or more second pigments (904) that is adapted to colorize the artificial turf fiber to be created from an extrusion polymer (902) such that the artificial turf fiber has the same color as the color of the one selected color selection article;
- outputting the determined amount of the one or more second pigments and, optionally, also the extrusion polymer, via the display.

## Amended claims

### Amended claims in accordance with Rule 137(2) EPC.

1. A system (700) comprising one or more artificial turf fiber samples (704, 706) and a color selection article (400, 602, 604, 702, 832, 834, 836) for selecting the color of an artificial turf fiber (202), the color selection article being an injection-molded product comprising a defined amount of one or more first pigments (812, 814, 816) and at least a first area (A1, A2, A3, A4) having a thickness (h1, h2, h3, h4) in the range of plus/minus 20% of the fiber width of one of the one or more artificial turf fiber samples.

2. The system of claim 1, the color selection article having a stepped shape profile comprising at least two steps, each step corresponding to a defined thickness of the color selection article, the first area corresponding to one of the steps.

3. The system of any one of the previous claims, the thickness of the artificial turf fiber of the one artificial turf fiber sample being between 100µm and 400µm.

4. The system of any one of the previous claims 2-3, the stepped shape profile comprising at least three steps respectively corresponding to a different thickness, the thicknesses being selected from a group comprising 100µm, 150µm, 200µm, 250µm, 300µm, 350µm, and 400µm.

5. The system of any one of the previous claims, the injection-molded product being a high-pressure injection-molded product generated at pressures of 300-480 bar.

6. The system of any one of the previous claims, wherein the polymer to be used for manufacturing the artificial turf fiber - the "extrusion polymer" - is a polymer adapted for forming the artificial turf fiber in a process comprising an extrusion step.

7. The system of any one of the previous claims, the injection-molded product being made of a polymer referred to as "injection-molding polymer," wherein the injection-molding polymer is a polymer adapted for forming the color selection article in the injection-molding operation.

8. The system of claim 7, the injection-molding polymer being a mixture of:
- polymer granules of the same type of polymer as the extrusion polymer; and
- at least one additive, the at least one additive being:
∘ an additive for homogeneously dispersing the pigments in the polymer granules; and/or
∘ an additive for reducing the viscosity of the mixture such that the mixture has a lower viscosity than the extrusion polymer.

9. The system of any one of claims 6-8, the injection-molding polymer and/or the extrusion polymer being selected from a group comprising: polyethylene, ABS, polypropylene, polyoxmethylene, polycarbonate, nylon polymer material, and blends of any one of said polymers.

10. The system of any one of the previous claims 7-10, the additive for homogeneously dispersing the pigments in the polymer granules being selected from the group comprising a colorless oil, chalk, wax, or combinations thereof.

11. The system of any one of the previous claims, the injection-molded product consisting of at least 80% by weight of polyethylene.
